Europäisches Patentamt

(19) European Patent Office

Office européen des brevets

(11) Numéro de publication : **0 063 981**
**B1**

(12) **FASCICULE DE BREVET EUROPÉEN**

(45) Date de publication du fascicule du brevet :
**11.11.87**

(51) Int. Cl.⁴ : **H 01 M 4/88**

(21) Numéro de dépôt : **82400638.1**

(22) Date de dépôt : **07.04.82**

(54) Procédé de fabrication d'électrodes minces, notamment d'électrodes à gaz, pour dispositifs électrochimiques et électrodes minces obtenues par ce procédé, les électrodes pouvant être dotées de collecteurs de courant.

(30) Priorité : 13.04.81 FR 8107407
13.04.81 FR 8107408

(43) Date de publication de la demande :
03.11.82 Bulletin 82/44

(45) Mention de la délivrance du brevet :
11.11.87 Bulletin 87/46

(84) Etats contractants désignés :
AT BE CH DE GB IT LI NL SE

(56) Documents cités :
EP-A- 0 051 439
EP-A- 0 056 725
DE-A- 2 111 095
FR-A- 1 321 359
FR-A- 1 455 261
FR-A- 1 457 130
FR-A- 1 491 996
FR-A- 1 522 224
FR-A- 2 224 881
US-A- 3 329 530
US-A- 3 553 032
US-A- 3 762 957
US-A- 3 943 006
US-A- 4 205 432
US-A- 4 216 045
US-A- 4 248 682
Le dossier contient des informations techniques
présentées postérieurement au dépôt de la demande
et ne figurant pas dans le présent fascicule.

(73) Titulaire : SOCIETE LES PILES WONDER
7-9, rue Paul Vaillant Couturier
F-92300 Levallois-Perret (FR)

(72) Inventeur : Vignaud, René
17, avenue Anatole France
F-93600 Aulnay-Sous-Bois (FR)

(74) Mandataire : Weinmiller, Jürgen et al
Lennéstrasse 9 Postfach 24
D-8133 Feldafing (DE)

Jouve, 18, rue St-Denis, 75001 Paris, France

**0 063 981**

## Description

L'invention est relative aux électrodes minces pour dispositifs électrochimiques (piles et accumulateurs). Elle concerne plus particulièrement les électrodes minces à gaz.

Elle a pour objet un procédé pour la préparation de telles électrodes permettant d'obtenir des électrodes minces de forme désirée quelconque, et les électrodes minces, de forme quelconque, obtenues par ce procédé.

A l'heure actuelle on sait fabriquer des électrodes minces de forme plane pour dispositifs électrochimiques à partir d'une pâte contenant du polytétrafluoréthylène.

Par exemple le brevet des Etats-Unis n° 3 419 900 de Elmore et Tanner décrit une électrode mince plane à gaz pour pile à combustible obtenue en préparant un mélange pâteux qui contient une poudre électrocatalytique métallique et une substance hydrofuge, constituée de préférence par une dispersion colloïdale de polytétrafluoréthylène, et en appliquant ce mélange pâteux sur une grille, par exemple en argent ou en platine ; puis la grille recouverte du mélange pâteux est séchée puis chauffée pour éliminer l'agent de dispersion du type savon.

On connaît par ailleurs le brevet français n° 1 522 224 de l'American Cyanamid Company, qui préconise de réaliser une électrode à gaz pour pile à combustible à partir d'un mélange pâteux contenant un catalyseur métallique sous forme de solution aqueuse, une substance hydrofuge, constituée par exemple par un latex de polyfluoréthylène, et, le cas échéant, un lubrifiant, tel qu'une huile minérale, et un agent dispersant, tel que silice ou alumine granulaire ou colloïdale ; conformément au brevet n° 1 522 224, ledit mélange est appliqué sur une grille métallique, puis la grille, ainsi revêtue et recouverte de chaque côté d'une feuille de matière plastique, est calandrée ou laminée entre des cylindres rotatifs, l'opération de calandrage ou de laminage étant répétée plusieurs fois ; puis on lave avec un solvant l'électrode plane mince ainsi obtenue pour en éliminer le lubrifiant et l'agent dispersant lorsque le mélange en comporte.

Le brevet français n° 2 143 593 de la Compagnie Générale d'Electricité décrit un procédé pour fabriquer des électrodes planes multicouches, dans lequel on prépare un mélange d'une matière conductrice et d'une gomme ou latex d'un produit hydrophobe, tel que le polytétrafluoréthylène ; on sèche et lamine le mélange notamment disposé sur un support tel qu'une grille ou un déployé métallique, ou une feuille poreuse, par exemple en polytétrafluoréthylène ; on obtient ainsi une couche, on empile plusieurs couches et on comprime l'empilage ainsi réalisé pour obtenir une électrode plane multicouche.

Ces procédés connus permettent d'obtenir une électrode mince plane comportant un agent électrocatalytique et un agent hydrofuge (notamment du polytétrafluoréthylène).

La demande EP-A-O 051 439, comprise dans l'état de la technique conformément à l'article 54(3) et (4) préconise la mise en forme à sec de Téflon 6A pulvérisé ; dans ces conditions le seul procédé possible pour la réalisation d'électrodes est un laminage progressif par passes successives, ce qui ne permet pas d'aboutir à des formes non planes.

La demande EP-A-O 056 725, comprise dans l'état de la technique conformément à l'article 54(3) et (4) prévoit d'extruder un matériau constitué de matière thermoplastique souple à base de polyéthylène ou propylène avec une faible charge de PTFE ; il ne permet d'obtenir que des feuilles, des pastilles.

Le brevet US-A-4 216 045 décrit un procédé consistant à disperser des poudres actives et du PTFE en poudre dans une solution visqueuse aqueuse ; une proportion d'eau importante est nécessaire pour obtenir une pâte malléable, ce qui ne peut s'appliquer à la réalisation de formes non planes.

L'invention permet, elle, de réaliser des électrodes de forme quelconque désirée.

Le procédé selon l'invention consiste :

d'une part, à mélanger — à une matière à propriétés électrocatalytiques, accompagnée éventuellement d'une matière assurant la conduction électronique — une substance hydrofuge constituée selon une première caractéristique de l'invention par du polytétrafluoréthylène, appelé ci-après PTFE, obtenu par coagulation de PTFE en émulsion et se présentant sous forme de particules formées à partir de petites fibres, particules ayant une taille moyenne de l'ordre de 0,5 mm, pour former un mélange sec auquel est ajouté un lubrifiant pour former un mélange pâteux ;

d'autre part, non pas à laminer ou calandrer ce mélange pâteux, mais à lui donner, selon une seconde caractéristique de l'invention, une forme non plane quelconque désirée par un procédé de formage, connu en soi, tel que compression dans un moule, injection, transfert.

On voit donc que, conformément à la présente invention, on met en œuvre, comme substance hydrofuge, un PTFE en particules de fibres, de taille moyenne de l'ordre de 0,5 mm, obtenu par coagulation d'une émulsion de PTFE et on met le mélange pâteux, contenant les produits actifs, le lubrifiant et ce PTFE particulier, dans la forme quelconque désirée, notamment par compression dans un moule, injection ou transfert.

On obtient ainsi une électrode de forme non plane quelconque désirée, par exemple en forme de cylindre creux, de tronc de cône creux, de doigt de gant, de prisme creux, cette énumération n'étant nullement limitative.

La demanderesse a constaté que si l'on utilisait un autre type de PTFE, notamment une dispersion colloïdale de PTFE, comme préconisé par le brevet US n° 3 419 900 précité, ou un latex ou une gomme de

2

PTFE, comme prévu dans les brevets français n° 1 522 224 ou 2 143 593 précités, il n'était pas possible, même en présence d'un lubrifiant, d'obtenir une électrode mince non plane, industriellement utilisable, par compression dans un moule, injection ou transfert, car l'électrode ainsi obtenue se fendait lors de sa fabrication ou dès utilisation.

Or il est très intéressant de réaliser, pour des générateurs électrochimiques, des électrodes minces, notamment des électrodes minces à gaz, non planes de forme complexe notamment

aux fins d'une adaptation de l'électrode et du générateur qui la comporte à une utilisation particulière ;

pour permettre le logement de l'électrode dans un boîtier de forme particulière ;

pour réaliser un gradient désiré de concentration des espèces gazeuses électroactives ;

pour simplifier la construction du générateur dans le cas où l'on désire que l'électrode fasse partie intégrante du réceptacle du générateur.

Or la demanderesse a constaté, comme exposé ci-dessus, qu'il n'était pas possible de réaliser des électrodes minces, non planes, utilisables dans des générateurs électrochimiques, si l'on mettait en forme des mélanges pâteux contenant, en plus des matières actives, du PTFE sous forme de suspension aqueuse, que l'on trouve dans le commerce et qui renferme environ 60 % de PTFE sec additionné d'agent mouillant. Après essorage et évaporation du mélange de matières actives et de cette suspension, on obtient une pâte qu'il n'est pas possible de mettre en forme non plane, même avec addition d'un lubrifiant, car l'électrode obtenue autrement que par calandrage ou laminage, comme préconisé dans les brevets antérieurs précités qui concernent la fabrication d'électrodes planes, est fragile et manque de la tenue mécanique nécessaire à une utilisation industrielle.

L'invention a donc, tout d'abord, pour objet un procédé selon les revendications 1 à 11.

Le polytétrafluoréthylène à mettre en œuvre est constitué par des particules formées à partir de fibres sèches et ayant une taille moyenne de l'ordre de 0,5 mm, obtenues par coagulation d'une émulsion de PTFE, par exemple du type vendu dans le commerce sous l'une des désignations suivantes :

Du Pont de Nemours, série 6

Imperial Chemical Industries (ICI), série CD

Hoechst, série 2000

Produits Chimiques Ugine Kuhlmann (PCUK), série 6

Montedison, série DPTA.

Le lubrifiant peut être constitué par au moins un hydrocarbure liquide (white spirit, kérosène, solvant naphta) ou au moins une huile (huile Rissela).

Si la tension superficielle du lubrifiant est trop élevée pour permettre une bonne mouillabilité des particules du mélange de composés actifs et de PTFE, il est avantageux d'y ajouter un agent tensio-actif, tel que alcools ou cétones, pour abaisser la tension superficielle.

Le mélange sec peut être avantageusement réalisé dans un mélangeur entraîné en rotation à grande vitesse.

En ce qui concerne l'opération de mise en forme, il y a d'abord lieu de noter que celle-ci peut être précédée d'une compression du mélange homogène avant ou après l'addition du lubrifiant et éventuellement de l'agent tensio-actif.

On a constaté par ailleurs que l'opération de formage et l'amenée du mélange lubrifié à l'opération de formage doivent être réalisées de préférence sans changement de direction du flux de mélange lubrifié afin de maintenir l'orientation des fibres de PTFE telle que ces fibres demeurent parallèles entre elles, car on augmente ainsi la résistance de l'électrode obtenue.

Enfin l'opération de formage peut être réalisée par compression, par injection, par transfert.

L'invention a également pour objet les électrodes, notamment les électrodes à gaz, minces de forme désirée quelconque obtenues par la mise en œuvre du procédé susvisé.

L'invention s'applique particulièrement, mais non exclusivement, à la fabrication d'électrodes positives ou cathodes pour générateurs électrochimiques.

La présente invention concerne également la préparation de collecteurs de courant pour des dispositifs électrochimiques (piles et accumulateurs) et plus précisément un procédé de préparation d'un ensemble unitaire électrode-collecteur de courant selon les revendications 14-18.

Le procédé de préparation de collecteurs de courant pour dispositifs électrochimiques consiste donc à déposer le collecteur sur l'électrode sous la forme d'une pellicule mince conductrice, inséparable (à moins d'en provoquer l'endommagement) de cette électrode. La pellicule est plus particulièrement une pellicule métallique poreuse, adhérente à la surface de l'électrode. Elle épouse la forme de l'électrode, qui peut être non plane quelconque.

Le dépôt est de préférence en nickel ; il peut également être en cuivre, en argent, en or, en platine, en alliage « Monel », en titane, en fer.

Son épaisseur est généralement comprise entre 0,01 mm et 5 mm ; elle est de préférence de l'ordre de 0,05 mm.

Le diamètre des pores du dépôt est inférieur à 0,5 mm, avec une perméabilité supérieure à 100 $cm^3/cm^2$ h (volume d'air par $cm^2$ de surface de dépôt et par heure).

L'invention a également pour objet un ensemble unitaire électrode-collecteur de courant obtenu par le procédé défini ci-dessus, le collecteur de courant étant constitué par une pellicule métallique mince poreuse adhérente, déposée sur une électrode.

Grâce à l'invention on peut déposer un collecteur de courant sur une électrode de forme quelconque, le collecteur épousant très fidèlement la surface de l'électrode, quelle qu'en soit la forme, même si celle-ci est très complexe. On peut réaliser une pellicule très mince, quoique attachée solidement à l'électrode. De ce fait on peut réaliser un collecteur très léger, ce qui permet de réduire la masse de l'ensemble électrode-collecteur et donc du générateur électrochimique (pile ou accumulateur) qui la comporte. Enfin la porosité du collecteur est favorable à la diffusion gazeuse à travers l'électrode.

L'invention permet donc en définitive de réaliser un ensemble électrode-collecteur poreux et léger, le collecteur adhérant fortement à l'électrode.

On va donner maintenant quelques exemples de fabrication d'électrodes minces non planes selon l'invention, par mise en œuvre de modes de réalisation non limitatifs du procédé selon l'invention. Dans ces exemples, les parties sont indiquées en poids.

### Exemple 1

On mélange intimement

30 parties de carbone catalysé à l'argent (composé électrocatalytique)
6 parties de graphite ⎱ (conducteurs électroniques)
4 parties de noir de carbone ⎰
60 parties de PTFE de type « Soreflon » 6-20
avec
50 parties d'huile Rissela (lubrifiant).

Le mélange est réalisé en opérant pendant trente minutes dans un mélangeur rotatif, à savoir un pot tournant autour d'un axe horizontal à une vitesse périphérique de 20 mètres/minute.

On obtient ainsi une pâte qui est introduite soit en vrac, par saupoudrage uniforme, soit en tant que préforme, après pré-compression de la pâte en un « pain », dans un moule ayant la forme qui correspond à celle que l'on désire donner à l'électrode, moule préalablement chauffé à 50 °C.

La mise en forme est réalisée par compression de la pâte dans le moule au moyen d'un piston coopérant avec le moule, en appliquant un déplacement relatif entre le moule et le piston (moule fixe et piston mobile, moule et piston mobiles ou enfin piston fixe et moule mobile), la pression de compression étant par exemple de l'ordre de une tonne par cm$^2$, mais dépendant bien entendu de la plasticité du mélange soumis à la compression. La compression est effectuée à volume fixe, un ajutage ou des évents permettant l'évacuation de l'excès de pâte hors du moule.

L'électrode formée est éjectée du moule et le lubrifiant est éliminé, par exemple par lavage avec un solvant.

On peut munir l'électrode d'un collecteur de courant soit d'une manière classique, soit de préférence comme décrit ci-après.

### Exemple 2

On mélange intimement

55 parties de carbone catalysé au bioxyde de manganèse
45 parties de PTFE de type ICI Série CD
avec
50 parties de kérosène (lubrifiant).

Le mélange est effectué dans un mélangeur type « bétonnière ».

Le mélange pâteux ainsi réalisé est introduit, à travers une trémie d'alimentation doseuse, dans une pression à injecter. Un piston hydraulique pousse d'un mouvement régulier la pâte homogène dans une chambre ou un pot d'injection maintenus à 50 °C environ ; la pâte traverse ensuite une buse pour pénétrer dans un moule, de préférence également porté à 50 °C, ayant la forme qui correspond à celle que l'on désire donner à l'électrode. La pâte prend la forme désirée dans l'électrode. Le moule est ensuite ouvert et l'électrode éjectée.

L'électrode ainsi obtenue est munie d'un collecteur de courant comme indiqué pour l'exemple 1 et le lubrifiant est éliminé, par exemple par évaporation.

### Exemple 3

On procède comme dans le cas de l'exemple 2 en ce qui concerne les produits mélangés et l'opération de mélange.

Le mélange pâteux ainsi obtenu est injecté à débit continu à travers une buse appropriée qui délivre un tube creux de pâte. Le solvant est éliminé par traversée d'un conformateur fonctionnant soit par pression, soit par aspiration.

Le tube est coupé en sections de longueur désirée pour constituer des électrodes qui sont dotées d'un collecteur de courant, comme indiqué précédemment.

Exemples 4 et 5

On prépare tout d'abord un mélange pâteux ayant la composition et obtenu par le procédé de l'exemple 1 (exemple 4) ou ayant la composition et obtenu par le procédé de l'exemple 2 (exemple 5).

On préforme la pâte ainsi obtenue par précompression sous une pression de 20 à 80 kg/cm² et à une vitesse de 5 à 10 cm/minute, de préférence sous vide, pour constituer un « pain » ou préforme que l'on introduit dans le pot d'une machine transfert. En appliquant une pression sur le pain on fait passer la pâte du pot dans la chambre de compression de la machine transfert ; un piston hydraulique transfère une quantité donnée de cette pâte de la chambre de compression dans le moule qui a la forme correspondant à celle que l'on désire donner à l'électrode. La pression sur le pain dépend du rapport de réduction désiré ; il est par exemple de 100 à 200 kg/cm² pour un rapport de réduction de 20 et de 600 à 800 kg/cm² pour un rapport de réduction de 180. Le pot, la chambre de compression et le moule sont maintenus à une température de 50 °C environ.

Les différents éléments précités de la machine transfert sont disposés de manière à assurer un parcours sans changement de direction de la pâte afin de maintenir parallèles entre elles les fibres de PTFE.

Comme dans les exemples 1 à 3, on procède à la pose du collecteur et à l'élimination du lubrifiant à partir de l'électrode obtenue par compression dans le moule, après éjection hors du moule.

Sur les figures annexées 1 à 9 on a représenté quelques formes d'électrodes, données bien entendu à titre d'exemples non limitatifs, que l'on peut obtenir par le procédé selon l'invention. Sur ces dessins :

la figure 1   représente, en perspective, une électrode 1 en forme de tube cylindrique creux ouvert à ses deux extrémités 2 et 3 et de section circulaire ;

la figure 2   représente, en perspective, une électrode 4 en forme de doigt de gant cylindrique creux, ouverte à son extrémité 5 mais fermée par une calotte hémisphérique 6 à l'autre extrémité ;

la figure 3   représente, en perspective, une électrode 7 en forme de tronc de cône creux, ouverte à ses deux extrémités 8 et 9 ;

la figure 4   représente, en perspective, une électrode 10 en forme de doigt de gant en tronc de cône creux ouverte à l'une de ses extrémités 11 mais fermée à l'autre extrémité par une calotte hémisphérique 12 ;

la figure 5   illustre, en perspective, une électrode tubulaire 13 de section non circulaire ; cette électrode est creuse et elle est ouverte à ses deux extrémités 14 et 15 ;

la figure 6   représente, en perspective, une électrode 16 en forme de prisme creux, ouverte à ses deux extrémités 17 et 18 ;

la figure 7   représente, en perspective, une électrode ouverte 19 ayant en section la forme de ω et comportant une surface externe 20 et une surface interne 21 ;

la figure 8   représente, en perspective, une électrode tubulaire 22 dont l'épaisseur varie, cette électrode étant ouverte à ses deux extrémités 23 et 24 ;

la figure 9,   enfin, illustre, en perspective, une électrode 25 présentant une surface tubulaire 26 et un certain nombre de nervures longitudinales 27.

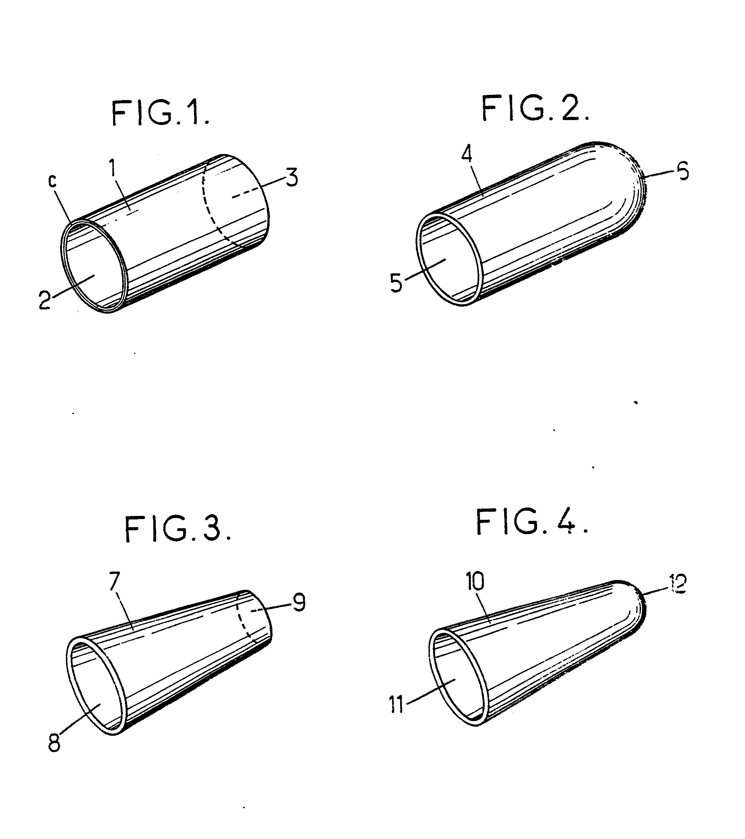

Les figures 1 à 9 annexées montrent qu'il est possible de réaliser des électrodes de forme quelconque désirée. Il est en effet toujours possible de faire passer la pâte ayant la composition selon l'invention à travers la buse d'une filière ayant la forme désirée et d'obtenir ainsi par exemple le profilé d'électrode que l'on désire.

Les épaisseurs et les formes de l'électrode sont bien entendu appropriées aux qualités recherchées, telles que résistance mécanique, facilité de diffusion des gaz, électroactivité, étanchéité, etc.

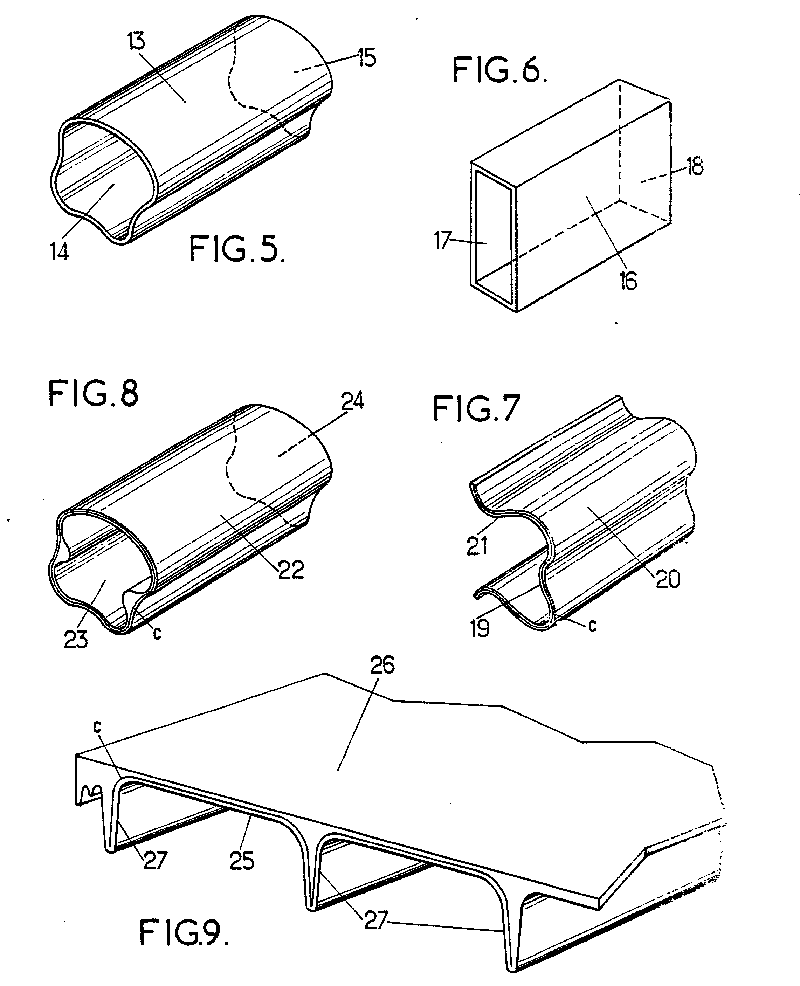

Généralement les épaisseurs des électrodes sont comprises entre environ 0,05 et environ 5 mm, de préférence au voisinage de 0,5 mm. On a vu que l'électrode peut avoir une épaisseur variable, comme cela est illustré par exemple sur la figure 8.

Le diamètre moyen des pores résiduels ne dépasse pas 10 microns, la perméabilité étant de l'ordre d'une centaine de cm/h.

Dans certains cas on peut utiliser une buse comportant un noyau central et une ouverture annulaire et filer la pâte sous forme de tube.

On peut ainsi obtenir des électrodes tubulaires ouvertes aux deux extrémités (figures 1, 5, 6, 8) ou bien ouvertes à une extrémité et fermées à l'autre extrémité, c'est-à-dire en doigt de gant (figure 2), soit même fermées aux deux extrémités. Leur épaisseur peut être variable (figure 8).

La forme tronconique (figures 3 et 4) peut être obtenue par plusieurs méthodes, par exemple par compression, injection ou extrusion-soufflage dans un moule de forme conique. Les surfaces tronconiques peuvent être soit ouvertes aux deux extrémités (figure 3), soit ouvertes à une extrémité et fermées à l'autre extrémité (figure 4), soit même fermées aux deux extrémités. Elles peuvent être de révolution ou ne pas être de révolution et elles peuvent présenter soit une épaisseur uniforme, soit une épaisseur non uniforme.

Les électrodes coniques ou cylindriques, lorsqu'elles sont fermées à une extrémité (forme en doigt de gant des figures 2 et 4) peuvent être fermées par une surface hémisphérique présentant une continuité de forme avec la surface cylindrique ou conique.

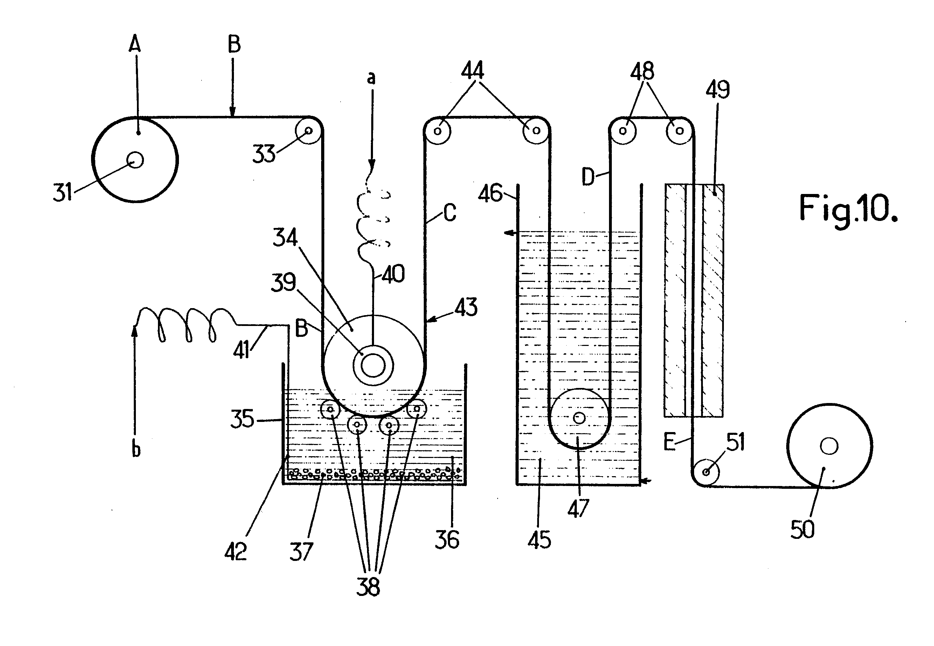

En ce qui concerne le collecteur, celui-ci peut être mis en place avantageusement de la manière qui va être décrite avec référence aux exemples I à IX et aux figures 10 à 15 ci-annexées ou bien par un procédé classique, tel que celui du noyau prisonnier. Dans ce dernier cas le collecteur de courant peut être constitué par une grille métallique, un feuillard de métal déployé, des rubans ou filaments, une capsule. Le noyau prisonnier est mis en place dans le moule, de préférence contre les parois ; le noyau prisonnier est de préférence fixé, par exemple par pincement, au moule préalablement à l'introduction sous pression de la pâte dans le moule, celle-ci venant entourer le collecteur en l'incorporant dans sa masse.

Sur quelques-unes des figures 1 à 9 annexées, on a représenté le collecteur c en place dans l'électrode.

La figure 10 illustre, schématiquement et en coupe, un premier mode de réalisation d'un dispositif pour mettre en œuvre le procédé selon l'invention.

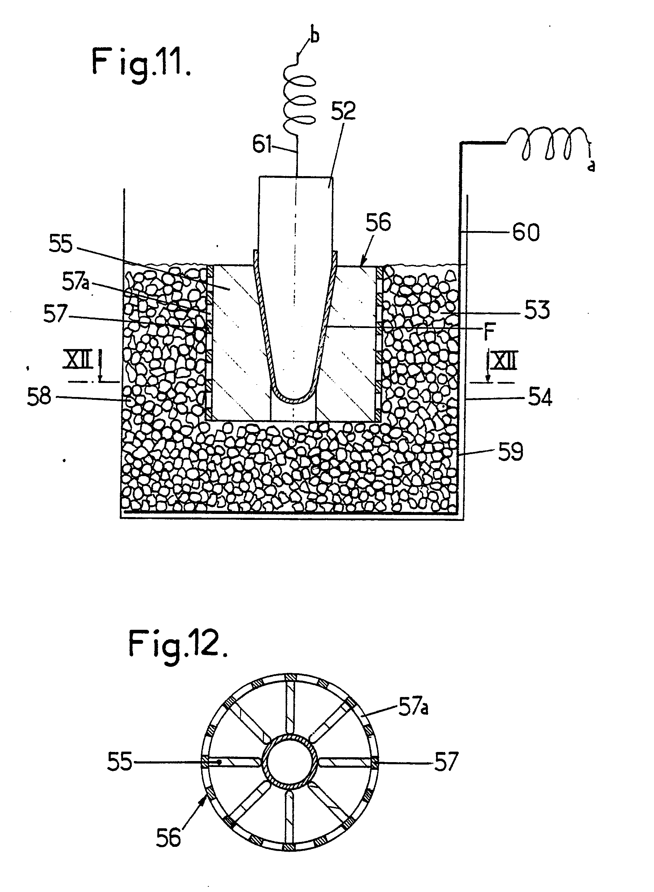

La figure 11 illustre, en coupe, un mode de réalisation d'un dispositif pour mettre en œuvre le procédé selon l'invention.

La figure 12 est une coupe par XII-XII de la figure 11.

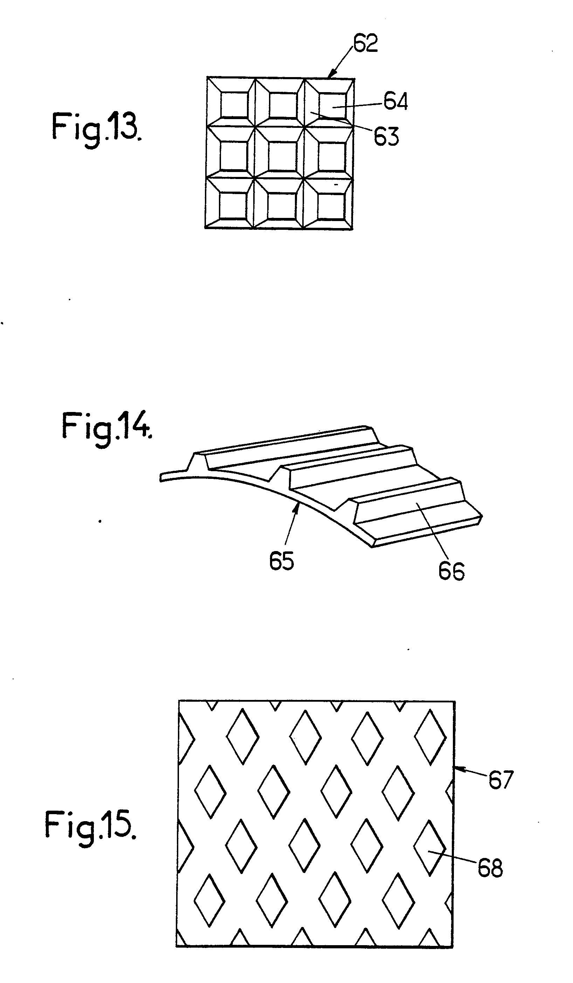

Les figures 13, 14 et 15 représentent trois structures de collecteur obtenues par le procédé selon l'invention, respectivement en nid d'abeilles, à nervures et à trame, ces figures étant des représentations partielles en plan (figures 13 et 15) ou en perspective (figure 14) d'une portion de collecteur.

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser des collecteurs de courant pour dispositifs électrochimiques, on s'y prend comme suit ou d'une manière analogue.

Exemple I

On mélange intimement

45 parties en poids de polytétrafluoréthylène, notamment sous forme de particules obtenues à partir de fibres sèches et ayant une taille moyenne de l'ordre de 0,5 mm, obtenues par coagulation d'une émulsion de polytétrafluoréthylène et

55 parties en poids de carbone catalysé à l'argent avec

50 parties en poids d'un lubrifiant tel que le kérosène,

de manière à obtenir une pâte.

On calandre cette pâte entre des cylindres chauffés à 50 °C pour obtenir une bande épaisse de 0,5 mm.

Comme on le voit sur la figure 10, un rouleau A de cette bande est monté sur un mandrin 31 ; la bande déroulée B passe sur un galet de renvoi 33 puis sur un cylindre conducteur 34 disposé dans une cuve d'électrodéposition 35, remplie d'un bain d'électrolyse 36 contenant une solution d'un sel soluble de nickel ; une anode soluble de nickel, constituée par exemple par des billes de nickel 37, est disposée dans le bain d'électrolyse 36. Des cylindres presseurs 38 appliquent la bande B contre le cylindre conducteur 34 ; la tension électrique d'électrolyse est appliquée entre les bornes a et b reliées respectivement à l'axe 39 du cylindre conducteur 34 par le conducteur 40 et à l'anode soluble, constituée par les billes 37, par un conducteur 41 et une plaque conductrice 42 en contact avec ces billes.

A titre d'exemple, le bain d'électrolyse contient 80 g de nickel, sous forme de sulfonate de nickel et 30 g d'acide borique, par litre de solution. La densité du courant d'électrodéposition est de 100 ampères/dm$^2$ d'électrode immergée et la vitesse de défilement de la bande B est telle que chaque portion d'électrode reste dans le bain d'électrolyse pendant une durée comprise entre 30 secondes et plusieurs minutes, suivant l'épaisseur du dépôt de nickel désiré, ce dépôt devant constituer le collecteur de courant. C'est la face 43 de la bande B opposée à la face en contact avec le cylindre conducteur 34 qui reçoit le dépôt de nickel qui constituera le collecteur de courant.

La bande C comportant sur sa face 43 le dépôt de nickel qui constitue le collecteur de courant, après avoir passé sur des galets de renvoi 44, traverse un bain de rinçage 45 disposé dans un bac 46, en passant sur une poulie 47. A la sortie du bain de rinçage, la bande nettoyée D arrive, après passage sur les galets de renvoi 48, dans un four de séchage 49 dans lequel elle est séchée et enfin l'électrode sèche E s'enroule sur un tambour 50 après passage sur un galet de renvoi 51.

On obtient ainsi sur le tambour 50 une bande constituée par la matière d'électrode revêtue, sur une face, d'un collecteur de courant en nickel.

On découpe ensuite cette bande en portions de forme et de dimension désirées et il est même possible ensuite de lui donner la configuration dans l'espace désirée, à savoir par exemple par compression, injection ou par transfert.

0 063 981

Exemple II

On mélange intimement

60 parties en poids de polytétrafluoréthylène de la même qualité que dans l'exemple I,
30 parties en poids de carbone catalysé au bioxyde de manganèse
6 parties en poids de graphite
4 parties en poids de noir de carbone conducteur,
avec
45 parties de kérosène

et on obtient une pâte.

Cette pâte est injectée dans un moule chauffé aux environs de 50 °C, puis éjectée de celui-ci sous la forme désirée. Par exemple on sort du moule une électrode en forme de doigt de gant tronconique (tronc de cône de révolution dont la partie basse est fermée par une calotte hémisphérique). Une telle électrode est illustrée en F sur la figure 11.

Cette électrode F est placée, comme illustré sur la figure 11, sur un mandrin 52 qui plonge dans un bain d'électrolyse 53 ayant la même composition que celle indiquée dans l'exemple I et qui est disposée dans un bac 54.

L'ensemble du mandrin 52 de l'électrode F repose sur les nervures 55 d'un porte-électrode 56 dont la périphérie 57 est percée de trous 57a pour permettre le passage de la solution d'électrolyse. Les nervures 55 ont pour objet d'appliquer l'électrode F contre le mandrin 52, afin d'améliorer le contact électrique entre ce mandrin, qui est conducteur, et l'électrode. Ceci est particulièrement visible sur la figure 12 qui est une coupe par XII-XII de la figure 11.

Les billes de nickel 58 sont disposées dans l'espace entre le bac 54 et le porte-électrode 56, ces billes étant disposées dans le bain d'électrolyse 53 et étant en contact électrique avec une pièce conductrice 59, par exemple en titane, connectée par un conducteur 60 à une des bornes a d'alimentation en courant électrique dont l'autre borne b est connectée au mandrin 62 par un conducteur 61.

La densité de courant appliquée est de 100 ampères/dm$^2$ d'électrode immergée. La mise sous tension, et donc l'application de dépôt, dure entre 30 secondes et 2 minutes. L'électrode revêtue de la couche de nickel électrodéposée est séchée puis débarrassée du lubrifiant, par exemple par évaporation.

L'électrode qui vient ainsi d'être préparée peut être utilisée très avantageusement pour constituer la cathode d'un générateur électrochimique (pile ou accumulateur) en lui associant une masse anodique et des séparateurs. Par exemple elle peut être utilisée pour réaliser des générateurs du type décrit dans une autre demande de brevet EP-82 400 639 0 (EP-A1-0 063 982) déposée par la demanderesse ce même jour, avec le même inventeur, et intitulée « Générateur électrochimique comprenant une électrode mince à gaz ».

Exemples III, IV et V

On peut, conformément à l'invention, réaliser des dépôts métalliques d'épaisseur non uniforme sur la surface de l'électrode à revêtir. On peut donc réaliser des collecteurs de courant d'épaisseur non constante.

On peut ainsi donner au dépôt métallique et donc au collecteur de courant une structure en nid d'abeilles (collecteur 62 illustré en partie sur la figure 13, sur laquelle on voit des nervures 63 en surépaisseur se coupant à angle droit en définissant des « caissons » 64), une structure à nervures (comme visible sur la figure 14, qui illustre une portion d'un tel collecteur courbe 65 comportant des nervures 66 en surépaisseur), en trame (comme illustré sur la figure 15, qui représente une électrode 67 comportant des surépaisseurs 68 en forme de losanges), en treillis ou à languettes par exemple.

De telle structures permettent de réaliser des ensembles électrode-collecteur aptes à mieux résister à des efforts mécaniques selon une certaine direction ou certaines directions, ou à favoriser une conductibilité dans une ou plusieurs directions, tout en ne perturbant pas la perméabilité générale de l'électrode grâce à l'épaisseur réduite du dépôt dans la partie principale du dépôt (par exemple entre les nervures ou entre les losanges).

Dans une variante, on peut réaliser d'abord un dépôt uniforme, puis superposer un dépôt ayant une structure particulière au premier dépôt uniforme.

Les dépôts non uniformes, notamment ceux selon les exemples III (figure 13), IV (figure 14) et V (figure 15) peuvent être obtenus au moyen de masques appliqués sur l'électrode au cours du dépôt électrolytique, ces masques étant par exemple analogues aux nervures 55 illustrées sur les figures 11 et 12.

Exemples VI et VII

On remplace, dans les exemples I et II, le bain d'électrolyse indiqué dans ces exemples par le bain suivant : 220 g/l de sulfate de cuivre et 30 g/l d'acide sulfurique, l'anode soluble étant constituée d'une

7

**0 063 981**

plaque de cuivre électrolytique, à la place des billes de nickel. La densité de courant utilisée est alors de plusieurs dizaines d'ampères/dm².

Exemples VIII et IX

On remplace le bain d'électrolyse des exemples I et II par le bain d'électrolyse suivant : 30 g/l de cyanure d'argent, 70 g/l de cyanure de sodium et 45 g/l de carbonate de sodium, l'anode soluble étant constituée par une feuille d'argent, au lieu de billes de nickel ; la densité de courant utilisée est alors de plusieurs dizaines d'ampères/dm².

On peut également, dans le cadre de l'invention, réaliser des dépôts en or, en platine, en alliage Monel, en titane ou même en fer (ce dernier métal étant, bien entendu, plus économique).

Le procédé selon l'invention est très avantageux, car il est particulièrement simple, il s'adapte pour appliquer un connecteur sur une électrode de forme quelconque, on peut régler à volonté la quantité de métal déposée et il est facilement automatisable.

On obtient par ce procédé un collecteur de courant constitué par une pellicule métallique déposée sur une électrode de forme quelconque, la pellicule étant poreuse, parfaitement adhérente sur l'électrode, quelle que soit la forme de celle-ci, et parfaitement adaptée à la conductibilité désirée et à la résistance mécanique souhaitée.

On notera également que le procédé selon l'invention ne nécessite pas l'achat antérieur ou le stockage de grilles ou de feuilles, qui sont nécessaires dans le cas des procédés de la technique antérieure mentionnés dans le préambule de la présente demande.

Comme il va de soi et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

**Revendications**

1. Procédé pour fabriquer une électrode, notamment une électrode à gaz, d'épaisseur comprise entre 0,05 et 5 mm, de forme non plane quelconque, consistant à préparer un mélange homogène malléable, extrudable à partir de particules sèches comprenant au moins un composé à activité électrocatalytique et des grains de polytétrafluoréthylène (PTFE), avec addition d'un lubrifiant pour enrober les particules du mélange, et à mettre finalement en forme non plane le mélange lubrifié pour constituer l'électrode, le polytétrafluoréthylène étant constitué par des grains secs fibreux ayant une taille moyenne de l'ordre de 0,5 mm, formés à partir de fibres sèches, obtenues elles-mêmes par coagulation d'une émulsion de polytétrafluoréthylène.

2. Procédé selon la revendication 1, caractérisé en ce que le lubrifiant est constitué par au moins un hydrocarbure liquide.

3. Procédé selon la revendication 1 ou 2, caractérisé en ce que le mélange de particules comprend également au moins un composé présentant une conductivité électronique.

4. Procédé selon l'une quelconque des revendications précédentes, caractérisé en ce que le mélange comprend également un agent tensio-actif.

5. Procédé selon l'une quelconque des revendications précédentes, caractérisé en ce que l'opération de mise en forme et l'amenée du mélange lubrifié à l'opération de mise en forme sont réalisées sans changement de direction du flux de mélange lubrifié afin d'assurer une orientation des fibres de PTFE dans une certaine direction.

6. Procédé selon l'une quelconque des revendications précédentes, caractérisé en ce que l'électrode obtenue a une épaisseur de l'ordre de 0,5 mm.

7. Procédé selon l'une quelconque des revendications précédentes, caractérisé en ce que le composé à activité électrocatalytique est constitué par du carbone catalysé.

8. Procédé selon l'une quelconque des revendications 3 à 7, caractérisé en ce que le composé conducteur électronique est constitué par un noir de carbone ou du graphite.

9. Procédé selon l'une quelconque des revendications précédentes, caractérisé en ce que le mélange est réalisé dans un mélangeur en rotation à grande vitesse.

10. Procédé selon l'une quelconque des revendications précédentes, caractérisé en ce que l'opération de mise en forme est précédée d'une compression du mélange homogène, avant ou après l'addition du lubrifiant et éventuellement de l'agent tensio-actif.

11. Procédé selon l'une quelconque des revendications précédentes, caractérisé en ce que l'opération de mise en forme est réalisée par compression, par injection ou par transfert.

12. Electrode, notamment électrode à gaz, obtenue par la mise en œuvre du procédé selon l'une quelconque des revendications précédentes.

13. Electrode, notamment électrode positive ou cathode, selon la revendication 12, caractérisée en ce qu'elle comporte en outre un collecteur incorporé.

14. Procédé de préparation d'un ensemble unitaire électrode-collecteur de courant, caractérisé en ce qu'on dépose, sur au moins une partie de la surface de cette électrode, une pellicule métallique mince

8

**0 063 981**

poreuse, adhérente sur l'électrode, le dépôt étant effectué par galvanoplastie sur une électrode obtenue par un procédé consistant à préparer un mélange homogène malléable, extrudable, de particules sèches comprenant au moins un composé à activité électrocatalytique et des grains de polytétrafluoréthylène (PTFE), avec addition d'un lubrifiant pour enrober les particules du mélange, et à mettre finalement en forme non plane le mélange lubrifié, le dépôt étant arrêté lorsqu'il a une épaisseur comprise entre 0,05 et 5 mm et le PTFE étant constitué par des grains secs ayant une taille moyenne de l'ordre de 0,5 mm, formés à partir de fibres sèches, obtenues elles-mêmes par coagulation d'une émulsion de polytétrafluoréthylène.

15. Procédé selon la revendication 14, caractérisé en ce que le mélange de particules comprend également au moins un composé présentant une conductivité électronique.

16. Procédé selon la revendication 14 ou 15, caractérisé en ce que l'on ajoute également un agent tensio-actif au mélange.

17. Procédé selon l'une quelconque des revendications 14 à 16, caractérisé en ce que le dépôt est réalisé en nickel ou en cuivre.

18. Procédé selon l'une quelconque des revendications 14 à 17, caractérisé en ce que le lubrifiant est constitué par au moins un hydrocarbure liquide.

19. Ensemble unitaire électrode-collecteur de courant obtenu par le procédé selon l'une quelconque des revendications 14 à 18, le collecteur de courant étant constitué par une pellicule métallique mince poreuse adhérente, déposée sur l'électrode, le diamètre des pores du dépôt étant inférieur à 0,5 mm, avec une perméabilité supérieure à 100 cm$^3$/cm$^2$ h.

**Claims**

1. A method for manufacturing an electrode, in particular a gas electrode, of a thickness comprised between 0,05 and 5 mm, of any non-plane shape, consisting in preparing a malleable homogeneous mixture, extrudable from dry particles comprising at least a compound with electrocatalytical activity and grains of polytetrafluorethylene (PTFE), with addition of a lubricant for envelopping the particles of the mixture, and to finally shaping in a non-plane shape the lubricated mixture for constituting the electrode, the polytetrafluorethylene being constituted by dry fibrous grains with a mean size of about 0,5 mm, shaped from dry fibers, which are themselves obtained by coagulation of a polytetrafluorethylene emulsion.

2. A method according to claim 1, characterized in that the lubricant is constituted by at least one liquid hydrocarbide.

3. A method according to claim 1 or 2, characterized in that the mixture of particles further comprises at least one compound having an electronic conductivity.

4. A method according to any one of the preceding claims, characterized in that the mixture further comprises a tensio-active agent.

5. A method according to any one of the preceding claims, characterized in that the shaping operation and the transfer of the lubricated mixture to the shaping operation are carried out without changing the transfer direction of the lubricated mixture so as to ensure an orientation of the PTFE fibers in a certain direction.

6. A method according to any one of the preceding claims, characterized in that the final electrode has a thickness of about 0,5 mm.

7. A method according to any one the preceding claims, characterized in that the compound with electrocatalytic activity is constituted by catalyzed carbon.

8. A method according to any one of claims 3 to 7, characterized in that the electronically conductive compound is constituted by carbon black or graphite.

9. A method according to any one of the preceding claims, characterized in that the mixture is realised in a mixer rotating at high speed.

10. A method according to any one of the preceding claims, characterized in that the shaping operation is preceded by a compression step of the homogeneous mixture, prior to or after the addition of the lubricant and possibly the tensio-active agent.

11. A method according to any one of the preceding claims, characterized in that the shaping operation is realised by compression, injection or transfer.

12. An electrode, in particular a gas electrode, obtained by applying the method according to any one of the preceding claims.

13. An electrode, in particular a positive electrode or anode, according to claim 12, characterized in that it further comprises an integrated collector.

14. A method for preparing a unitary assembly electrode-current collector, characterized in that on at least part of the surface of this electrode, a thin porous metal film is deposited, which adheres to the electrode, the depositing being carried out by electroplating on an electrode obtained by a method consisting in preparing a malleable homogeneous extrudable mixture of dry particles comprising at least one compound with electrocatalytical activity and grains of polytetrafluorethylene (PTFE), with addition of a lubricant for envelopping the particles of the mixture, and finally shaping the lubricated mixture into a

9

non-plane shape, the depositing phase being stopped when the deposit has a thickness of between 0,05 and 5 mm, and the PTFE being constituted of dry grains having a mean size of about 0,5 mm, formed from dry fibers which are themselves obtained by coagulation of a polytetrafluorethylene emulsion.

15. A method according to claim 14, characterized in that the mixture of particles further comprises at least one compound presenting an electronic conductivity.

16. A method according to claim 14 or 15, characterized in that a tensio-active agent is further added to the mixture.

17. A method according to any one of claims 14 to 16, characterized in that the deposit is formed from nickel or copper.

18. A method according to any one of claims 14 to 17, characterized in that the lubricant is constituted by at least one liquid hydrocarbide.

19. A unitary assembly electrode-current collector obtained by the method according to any one of claims 14 to 18, the current collector being constituted by an adhering thin porous metal film deposited on the electrode, the diameter of the pores of the deposit being smaller than 0,5 mm, with a permeability above 100 cm$^3$/cm$^2$ h.


**Patentansprüche**

1. Verfahren zur Herstellung einer Elektrode, insbesondere einer Gaselektrode, einer Dicke von zwischen 0,05 und 5 mm, beliebiger nicht-ebener Form, das darin besteht, eine geschmeidige homogene Mischung herzustellen, die ausgehend von trockenen Partikeln extrudierbar ist, die mindestens einen Stoff mit elektrokatalytischer Aktivität und Körner von Polytetrafluoräthylen aufweisen, mit Zusatz eines Schmiermittels, um die Partikel der Mischung zu umhüllen, und schließlich die mit Schmiermittel versehene Mischung in eine nicht-ebene Form zu bringen, um die Elektrode zu bilden, wobei das Polytetrafluoräthylen aus trockenen faserförmigen Körnern besteht, mit einer mittleren Größe von etwa 0,5 mm, die ausgehend von trockenen Fasern gebildet werden, die selbst durch Koagulation einer Emulsion von Polytetrafluoräthylen hergestellt werden.

2. Verfahren nach Anspruch 1, dadurch gekennzeichnet, daß das Schmiermittel aus mindestens einem flüssigen Hydrocarbid besteht.

3. Verfahren nach dem Anspruch 1 oder 2, dadurch gekennzeichnet, daß die Mischung von Partikeln mindestens einen Stoff mit elektronischer Leitfähigkeit aufweist.

4. Verfahren nach einem beliebigen der vorhergehenden Ansprüche, dadurch gekennzeichnet, daß die Mischung außerdem ein tensio-aktives Agens aufweist.

5. Verfahren nach einem beliebigen der vorhergehenden Ansprüche, dadurch gekennzeichnet, daß der Formvorgang und der Zusatz von Schmiermittel zum Formvorgang ohne Richtungsänderung des Flusses der mit Schmiermittel versehenen Mischung geschehen, um eine Orientierung der PTFE-Fasern in eine bestimmte Richtung zu gewährleisten.

6. Verfahren nach einem beliebigen der vorhergehenden Ansprüche, dadurch gekennzeichnet, daß die erhaltene Elektrode eine Dicke von etwa 0,5 mm hat.

7. Verfahren nach einem beliebigen der vorhergehenden Ansprüche, dadurch gekennzeichnet, daß der Stoff mit elektrokatalytischer Aktivität aus katalysiertem Kohlenstoff besteht.

8. Verfahren nach einem beliebigen der Ansprüche 3 bis 7, dadurch gekennzeichnet, daß der elektronisch leitende Stoff aus Ruß oder Graphit besteht.

9. Verfahren nach einem beliebigen der vorhergehenden Ansprüche, dadurch gekennzeichnet, daß die Mischung in einem schnell drehenden Mischer hergestellt wird.

10. Verfahren nach einem beliebigen der vorhergehenden Ansprüche, dadurch gekennzeichnet, daß dem Formvorgang eine Komprimierung der homogenen Mischung vor oder nach dem Zusatz des Schmiermittels und eventuell des tensio-aktiven Agens vorausgeht.

11. Verfahren nach einem beliebigen der vorhergehenden Ansprüche, dadurch gekennzeichnet, daß der Formvorgang durch Komprimierung, Spritzguß oder Transfer durchgeführt wird.

12. Elektrode, insbesondere Gaselektrode, die durch die Anwendung des Verfahrens nach einem beliebigen der vorhergehenden Ansprüche hergestellt wird.

13. Elektrode, insbesondere positive Elektrode oder Anode, nach Anspruch 12, dadurch gekennzeichnet, daß sie weiter einen eingebauten Kollektor enthält.

14. Verfahren zur Herstellung einer Blockeinheit Elektrode-Stromkollektor, dadurch gekennzeichnet, daß man auf mindestens einen Teil der Oberfläche dieser Elektrode einen dünnen porösen Metallfilm aufbringt, der an der Elektrode haftet, wobei das Aufbringen durch Galvanoplastik auf einer durch ein Verfahren erhaltenen Elektrode durchgeführt wird, das darin besteht, eine geschmeidige extrudierbare homogene Mischung aus trockenen Partikeln herzustellen, die mindestens einen Stoff mit elektrokatalytischer Aktivität und Körner aus Polytetrafluoräthylen (PTFE) enthalten, mit Zusatz eines Schmiermittels, um die Partikel der Mischung zu umhüllen, und anschliessend die mit Schmiermittel versehene Mischung in eine nichtebene Form zubringen, wobei die Beschichtung beendet wird, wenn sie eine Dicke zwischen 0,05 und 5 mm aufweist, und wobei das PTFE aus trockenen Körnern besteht, die eine mittlere Größe von etwa 0,5 mm aufweisen und ausgehend von trokkenen Fasern geformt werden, die selbst durch Koagulation einer Emulsion von Polytetrafluoräthylen erhalten werden.

15. Verfahren nach Anspruch 14, dadurch gekennzeichnet, daß die Partikelmischung auch mindestens einen Stoff mit elektronischer Leitfähigkeit aufweist.

16. Verfahren nach Anspruch 14 oder 15, dadurch gekennzeichnet, daß man auch ein tensio-aktives Agens der Mischung hinzufügt.

17. Verfahren nach einem beliebigen der Ansprüche 14 bis 16, dadurch gekennzeichnet, daß die Beschichtung mit Nickel oder Kupfer erfolgt.

18. Verfahren nach einem beliebigen der Ansprüche 14 bis 17, dadurch gekennzeichnet, daß das Schmiermittel aus mindestens einem flüssigen Hydrocarbid besteht.

19. Blockeinheit Elektrode-Stromkollektor erhalten durch das Verfahren gemäß einem beliebigen der Ansprüche 14 bis 18, wobei der Stromkollektor aus einem porösen haftenden dünnen Metallfilm besteht, der auf die Elektrode aufgebracht ist, wobei der Porendurchmesser der Beschichtung unter 0,5 mm liegt, mit einer Luftdurchlässigkeit von mehr als 100 $cm^3/cm^2$ h.

0 063 981

FIG.1.

FIG.2.

FIG.3.

FIG.4.

FIG.5.

FIG.6.

FIG.8

FIG.7

FIG.9.

Fig.10.

## Fig.11.

## Fig.12.

Fig.13.

Fig.14.

Fig.15.